# EUROPÄISCHE PATENTSCHRIFT

(11) **EP 2 212 568 B1**
(45) Veröffentlichungstag und Bekanntmachung des Hinweises auf die Patenterteilung: **27.06.2012**
(21) Anmeldenummer: 08855442.3
(22) Anmeldetag: 25.11.2008
(51) Int. Cl.: F16B 47/00

(54) **SAUGNAPFBEFESTIGER**
SUCTION CUP MOUNT
DISPOSITIF DE FIXATION À VENTOUSE

(30) Priorität: 29.11.2007 DE 102007057889
(43) Veröffentlichungstag der Anmeldung: 04.08.2010
(73) Patentinhaber: Huang, Shu-Pei, Taipei (TW); Kuhn, Joachim, Taipei (TW)
(72) Erfinder: Huang, Shu-Pei, Taipei (TW); Kuhn, Joachim, Taipei (TW)
(74) Vertreter: Wolf, Eckhard
(86) Internationale Anmeldenummer: PCT/EP2008/066125
(87) Internationale Veröffentlichungsnummer: WO 2009/068516

(56) Entgegenhaltungen:
- EP-A- 0 844 406
- US-A- 3 675 886
- US-A- 5 996 950
- US-A1- 2002 113 181
- US-A1- 2005 218 278

## Beschreibung

Die Erfindung betrifft einen Saugnapfbefestiger mit den Merkmalen aus dem Oberbegriff des Anspruchs 1 (US 2005/0218278A1).

Saugnapfbefestiger sind zur Anbringung von Gegenständen an glatten Flächen bekannt (DE-A-610194). Sie bilden eine Art Saugvorrichtung, bei welcher ein möglichst hohes Vakuum und eine breite Auflage der Dichtungsfläche erzeugt werden soll. Um eine möglichst große Haltekraft zu erzielen, wird dort durch eine ballige Form eines den Saugnapf bildenden Gummikörpers an seiner Auflagefläche die Luft besser beseitigt und durch eine der Form eines Tellers ähnliche Gestaltung der Rückfläche sowie durch die Form des Andrückrandes der Kappe eine breite Auflage erzielt. Eine zuverlässige Haltefunktion wird jedoch nur dann erzielt, wenn die Oberfläche, gegen die der Saugnapf anliegt, sehr glatt ist.

Der Erfindung liegt die Aufgabe zugrunde, ein Saugnapfbefestiger der eingangs angegebenen Art zu entwickeln, dessen Haltekraft verbessert wird.

Zur Lösung dieser Aufgabe wird die in dem Patentanspruch 1 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass die Dichtwirkung zwischen Druckkappe, Saugnapf und Oberfläche verbessert werden kann. Um dies zu erreichen, wird gemäß einer ersten Ausführungsvariante der Erfindung vorgeschlagen, dass die Druckkappe mindestens eine zur umlaufenden Randkante konzentrische ringförmige Rippe aufweist, deren Rippenkante zusammen mit der umlaufenden Randkante gegen die Außenfläche des Saugnapfs anpressbar ist. Mit diesen Maßnahmen wird erreicht, dass das elastisch nachgiebige Material des Saugnapfs sowohl durch den umlaufenden Rand als auch durch die mindestens eine ringförmige Rippe mit der gegebenen Anpresskraft gegen die glatte Oberfläche gepresst wird, so dass an mindestens zwei im Abstand voneinander angeordneten Stellen ein hoher Anpressdruck mit guter Dichtwirkung erzielt wird, wodurch ein Eindringen von Luft in das Vakuum des Saugnapfs wirksam verhindert wird. Eine weitere Verbesserung in dieser Hinsicht wird erzielt, wenn der umlaufende Rand und die Randkante der mindestens einen ringförmigen Rippe der Druckkappe eine gemeinsame Ebene aufspannen.

Eine weitere vorteilhafte Ausgestaltung der Erfindung sieht vor, dass die umlaufende Randkante und die Rippe der Druckkappe sowie der Saugnapf einen ovalen, rhombischen, rechteckigen oder quadratischen Umriss aufweisen.

Gemäß der Erfindung ist die glatte Oberfläche an einer einseitig mit einem Haftvermittler beschichteten Folienscheibe ausgebildet, die mit ihrem Haftvermittler auf eine Unterlage aufgeklebt werden kann und die gemäß der Erfindung mindestens einen im montierten Zustand im Luftraum des Saugnapfs angeordneten Durchbruch aufweist. Der Durchbruch sorgt dafür, dass sich die Folie nicht unter der Einwirkung des im Saugnapf befindlichen Vakuums von der Unterlage ablösen und von dieser abfallen kann. Zweckmäßig weist die Folienscheibe einen kreisförmigen Umriss auf, während der Durchbruch ein konzentrisch in der Folienscheibe befindliches Loch bilden kann.

Grundsätzlich ist es möglich, dass der Umriss der Folienscheibe oval, rhombisch, rechteckig oder quadratisch ist.

Zur Verbesserung der Haltekraft des Saugnapfbefestigers wird gemäß einer bevorzugten Ausgestaltung der Erfindung vorgeschlagen, dass der Saugnapf im drucklosen Zustand unter Begrenzung eines einseitigen Hohlraums napfartig vorgeformt ist und dass ein Auspressen von Luft aus dem zur glatten Oberfläche hin begrenzten Luftraum durch mechanischen Druck über den Gewindebolzen bewirkt wird, bevor der eingeschlossene Luftraum für den Vakuumaufbau durch mechanischen Zug über den Gewindebolzen wieder vergrößert wird.

Im Folgenden wird die Erfindung anhand eines in der Zeichnung in schematischer Weise dargestellten Ausführungsbeispiels näher erläutert. Es zeigen
- Fig. 1: eine schaubildliche Darstellung eines Saugnapfbefestigers im montierten Zustand;
- Fig. 2a: eine schaubildliche Darstellung der Einzelteile des Saugnapfbefestigers;
- Fig. 2b: den Saugnapfbefestiger im Zuge des Befestigungsvorgangs in schaubildlicher Darstellung;
- Fig. 3: einen Schnitt durch den Saugnapfbefestiger nach Fig. 1 und 2;
- Fig. 4: eine schaubildliche Darstellung des Saugnapfbefestigers mit Folienscheibe;
- Fig. 5: eine Draufsicht auf die Folienscheibe.

Der in der Zeichnung dargestellte Saugnapfbefestiger 10 ist zur Fixierung an der ebenen Oberfläche 12 einer starren Unterlage 14, beispielsweise an einer gefliesten Wand, bestimmt. Er besteht im Wesentlichen aus einer starren kuppelartig gewölbten Druckkappe 16 und einem Saugnapf 18. Der aus einem flexiblen Material bestehende Saugnapf 18 weist ebenso wie die Druckkappe 16 einen kreisförmigen oder ovalen Umriss auf. Im zentralen verdickten Bereich 22 des Saugnapfs 18 ist ein Gewindebolzen 24 eingebettet, der mit seinem nach außen überstehenden Gewindeteil die Druckkappe 16 im Bereich eines Durchbruchs 20 durchsetzt. Im montierten Zustand liegt die Druckkappe 16 mit einer umlaufenden Randkante 26 gegen die Außenfläche des Saugnapfs 18 unter Bildung einer ringförmigen Dichtungsfläche 28 an und wird dort mittels eines auf den Gewindebolzen 24 aufgedrehten und an der Außenfläche der Druckkappe 16 abgestützten Mutterelements 30 gegen die Oberfläche 12 angepresst. Gleichzeitig wird der Saugnapf 18 unter Vergrößerung des zur Oberfläche 12 hin eingeschlossenen Luftraums 32 durch mechanischen Zug über den Gewindebolzen 24 verformt. Um ein leichtes Verdrehen des Mutterelements 30 zu ermöglichen, ist dieses entweder unrund ausgebildet oder an seiner Oberfläche mit einer Rändelstruktur versehen.

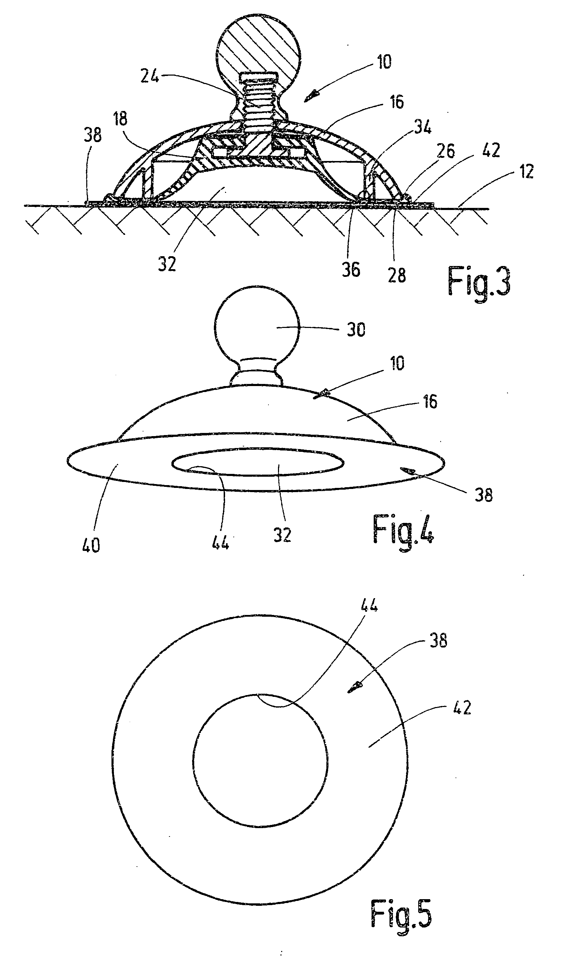

Eine Besonderheit der Erfindung besteht darin, dass die Druckkappe 16 eine zur umlaufenden Randkante 26 konzentrische ringförmige Rippe 34 aufweist, deren Rippenkante 36 zusammen mit der umlaufenden Randkante 26 gegen die Außenfläche des Saugnapfs anpressbar ist. Die Maßnahme sorgt dafür, dass sowohl die Basis der Dichtungsfläche 28 verbreitert als auch der Anpressdruck im Bereich der Randkante 26 und der Rippenkante 36 vergrößert wird, so dass eine zuverlässige Abdichtung gegen Luftzutritt in den Luftraum 32 gewährleistet ist. Wie aus Fig. 3 zu ersehen ist, spannen die umlaufende Randkante 26 und die Rippenkante 36 eine gemeinsame Ebene auf.

Die Abdichtung gegen Luftzutritt ist umso besser, je glatter die Oberfläche 12 ist, gegen die der Saugnapf 18 mit seiner Dichtfläche 28 abgedichtet ist. Um auch bei relativ rauen Oberflächen 12 der starren Unterlage 14 eine gute Abdichtung zu gewährleisten, ist gemäß einer weiteren Besonderheit der Erfindung eine Folienscheibe 38 vorgesehen, die auf ihrer der starren Unterlage 14 zugewandten Außenfläche 40 einen Haftvermittler trägt und die an ihrer von der Außenfläche 40 abgewandten Oberfläche 42 glatt ist, um dort den Saugnapf 10 mit seiner Dichtungsfläche 28 anlegen zu können. Um sicherzustellen, dass die Folienscheibe 38 durch das im Luftraum 32 des Saugnapfs 18 erzeugte Vakuum nicht von der starren Unterlage 14 abgehoben wird, befindet sich im Zentrum der kreisrunden oder ovalen Folienscheibe 38 ein konzentrischer Durchbruch 44, der im montierten Zustand entsprechend Fig. 3 vollständig im Inneren des Luftraums 32 angeordnet ist.

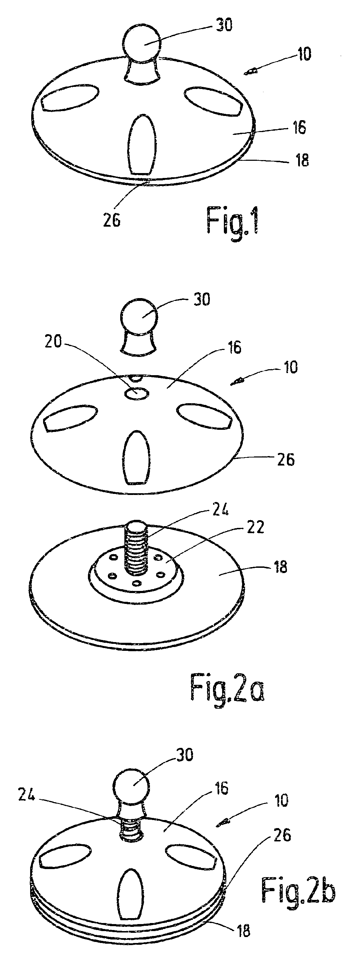

Bei der Montage des Saugnapfbefestigers 10 an einer Unterlage 14 wird zweckmäßig wie folgt vorgegangen:
Zunächst werden die drei Teile des Saugnapfbefestigers gemäß Fig. 2a zu einem zusammenhängenden Gebilde entsprechend Fig. 2b vormontiert. Weiter wird an der starren Unterlage 14 im Bereich der Befestigungsstelle die Folienscheibe 38 mit ihrem Haftvermittler fixiert. Sodann wird das vormontierte Gebilde nach Fig. 2b im Bereich der Folienscheibe 38 konzentrisch zum Durchbruch 40 an der Unterlage angelegt, so dass der Saugnapf 18 mit seiner Dichtungsfläche 28 rundum gegen die Oberfläche 42 der Folienscheibe 38 anliegt. In dieser Lage wird der napfartig vorgeformte Saugnapf 18 über den Gewindebolzen 34 in Richtung Unterlage 14 gedrückt, so dass die im Saugnapf befindliche Restluft aus dem Luftraum 32 entfernt wird. Anschließend wird das Mutterelement 32 von der in Fig. 2b in die in Fig. 1 und 3 gezeigte Lage unter Vergrößerung des Luftraums 32 im Saugnapf und unter Anpressen der Druckkappe 16 mit ihrer Randkante 26 und ihrer Rippenkante 36 gegen die Oberfläche des Saugnapfs festgedreht, bis der Saugnapf mit seinem verdickten Teil 22 von innen und das Mutterelement 30 von außen gegen die Druckkappe 16 anliegt.

Zusammenfassend ist folgendes festzuhalten: Die Erfindung betrifft einen Saugnapfbefestiger 10, der an einer starren Unterlage 14 mit glatter Oberfläche fixierbar ist. Der Saugnapfbefestiger weist eine starre kuppelartig gewölbte Druckkappe 16 sowie einen gegen eine glatte Oberfläche 12,42 anlegbaren Saugnapf 18 aus flexiblem Material auf. Der Saugnapf 18 trägt einen die Druckkappe 16 durchsetzenden Gewindebolzen 24. Die Druckkappe 16 ist mit ihrer umlaufenden Randkante 26 mittels eines auf den Gewindebolzen 24 aufgedrehten und gegen die Druckkappe abgestützten Mutterelements 30 gegen die Außenfläche des Saugnapfs 18 unter Bildung einer ringförmigen Dichtungsfläche 28 anpressbar. Erfindungsgemäß weist die Druckkappe 16 zusätzlich eine zur umlaufenden Randkante 26 konzentrische ringförmige Rippe 34 auf, deren Rippenkante 36 zusammen mit der umlaufenden Randkante 26 gegen die Außenfläche des Saugnapfs 18 anpressbar ist.

## Patentansprüche

1. Saugnapfbefestiger mit einer starren, kuppelartig gewölbten Druckkappe (16) und mit einem gegen eine glatte Oberfläche (12,42) anlegbaren, einen zentralen, die Druckkappe (16) durchsetzenden Gewindebolzen (24) tragenden Saugnapf (18) aus flexiblem Material, gegen dessen Außenfläche unter Bildung einer ringförmigen Dichtungsfläche (28) eine umlaufende Randkante (26) der Druckkappe (16) vorzugsweise mittels eines auf den Gewindebolzen (24) aufgedrehten und gegen die Druckkappe (16) abgestützten Mutterelements (30) anpressbar ist, und dessen elastische Verformung eine Vergrößerung des zur glatten Oberfläche (12,42) hin eingeschlossenen Luftraums (32) durch mechanischen Zug über den Gewindebolzen (24) bewirkt, wobei die Druckkappe (16) mindestens eine zur umlaufenden Randkante (26) konzentrische ringförmige Rippe (34) aufweist, deren Rippenkante (36) zusammen mit der umlaufenden Randkante (26) gegen die Außenfläche des Saugnapfs (18) anpressbar ist, **dadurch gekennzeichnet, dass** die glatte Oberfläche (42) an einer einseitig mit einem Haftvermittler beschichteten Folienscheibe (38) ausgebildet ist, die mindestens einen im montierten Zustand im Luftraum (32) des Saugnapfs (18) angeordneten Durchbruch (44) aufweist.

2. Saugnapfbefestiger nach Anspruch 1, **dadurch gekennzeichnet, dass** die umlaufende Randkante (26) und die Rippenkante (36) eine gemeinsame Ebene aufspannen.

3. Saugnapfbefestiger nach Anspruch 1 oder 2, **dadurch gekennzeichnet, dass** die umlaufende Randkante (26) und die Rippe (34) sowie der Saugnapf (18) einen ovalen, rhombischen, rechteckigen oder quadratischen Umriss aufweisen.

4. Saugnapfbefestiger nach einem der Ansprüche 1 bis 3, **dadurch gekennzeichnet, dass** die Folienscheibe (38) einen kreisförmigen Umriss aufweist und dass der Durchbruch (44) konzentrisch in der Folienscheibe (32) angeordnet ist.

5. Saugnapfbefestiger nach einem der Ansprüche 1 bis 4, **dadurch gekennzeichnet, dass** die Folienscheibe (38) einen ovalen, rhombischen, rechteckigen oder quadratischen Umriss aufweist.

6. Saugnapfbefestiger nach einem der Ansprüche 1 bis 5, **dadurch gekennzeichnet, dass** der Saugnapf (18) in drucklosem Zustand unter Begrenzung eines einseitig offenen Hohlraums napfartig vorgeformt ist, und dass durch elastische Verformung des Saugnapfs (18) ein Auspressen von Luft aus dem zur glatten Oberfläche (12,42) hin begrenzten Luftraum (32) durch mechanischen Druck über den Gewindebolzen bewirkt wird, bevor der eingeschlossene Luftraum (32) durch mechanischen Zug über den Gewindebolzen (24) vergrößert wird.

## Claims

1. Suction cup fastener having a rigid pressure cap (16) which is curved in a dome-shaped manner, and having a suction cup (18) made of flexible material, which can be placed against a smooth surface (12, 42), carries a central threaded bolt (24) passing through the pressure cap (16), and against the outer surface of which a circumferential peripheral edge (26) of the pressure cap (16) is pressable, forming an annular sealing surface (28), preferably by means of a nut element (30) screwed onto the threaded bolt (24) and supported against the pressure cap (16), the elastic deformation of said suction cup (18) causing an enlargement, by mechanical tension via the threaded bolt (24), of the air space (32) enclosed in the direction of the smooth surface (12, 42), wherein the pressure cap (16) has at least one annular rib (34) which is concentric with the circumferential peripheral edge (26) and the rib edge (36) of which is pressable, together with the circumferential peripheral edge (26), against the outer surface of the suction cup (18), **characterized in that** the smooth surface (42) is formed on a film disc (38) which is coated on one side with an adhesion promoter and which has at least one cutout (44) arranged in the air space (32) in the suction cup (18) in the mounted state.

2. Suction cup fastener according to Claim 1, **characterized in that** the circumferential peripheral edge (26) and the rib edge (36) define a common plane.

3. Suction cup fastener according to Claim 1 or 2, **characterized in that** the circumferential peripheral edge (26) and the rib (34), and also the suction cup (18), have an oval, rhombic, rectangular or square outline.

4. Suction cup fastener according to one of Claims 1 to 3, **characterized in that** the film disc (38) has a circular outline, and **in that** the cutout (44) is arranged in a concentric manner in the film disc (38).

5. Suction cup fastener according to one of Claims 1 to 4, **characterized in that** the film disc (38) has an oval, rhombic, rectangular or square outline.

6. Suction cup fastener according to one of Claims 1 to 5, **characterized in that**, in the unpressured state, the suction cup (18) is preformed in the manner of a cup, delimiting a cavity which is open on one side, and **in that** elastic deformation of the suction cup (18) causes air to be pressed out of the air space (32), bounded in the direction of the smooth surface (12, 42), by mechanical pressure via the threaded bolt, before the enclosed air space (32) is enlarged by mechanical tension via the threaded bolt (24).

## Revendications

1. Dispositif de fixation à ventouse comprenant un capuchon de pression (16) rigide, de courbure en forme de coupelle, et une ventouse (18) en matériau flexible, pouvant être appliquée contre une surface lisse (12, 42), portant un boulon fileté central (24) traversant le capuchon de pression (16), contre la surface extérieure de laquelle peut être pressée une arête de bord périphérique (26) du capuchon de pression (16) en formant une surface d'étanchéité annulaire (28), de préférence au moyen d'un élément d'écrou (30) vissé sur le boulon fileté (24) et supporté contre le capuchon de pression (16), et dont la déformation élastique provoque une augmentation de l'espace (32) formé vers la surface lisse (12, 42) par traction mécanique sur le boulon fileté (24), le capuchon de pression (16) présentant au moins une nervure (34) de forme annulaire concentrique à l'arête de bord périphérique (26), dont l'arête de nervure (36) peut être pressée conjointement avec l'arête de bord périphérique (26) contre la surface extérieure de la ventouse (18), **caractérisé en ce que** la surface lisse (42) est réalisée sur un disque en feuille (38) revêtu d'un côté d'un promoteur d'adhésion, lequel disque en feuille présente au moins une ouverture (44) disposée, dans l'état monté, dans l'espace (32) de la ventouse (18).

2. Dispositif de fixation à ventouse selon la revendication 1, **caractérisé en ce que** l'arête de bord périphérique (26) et l'arête de nervure (36) sous-tendent un plan commun.

3. Dispositif de fixation à ventouse selon la revendication 1 ou 2, **caractérisé en ce que** l'arête de bord périphérique (26) et la nervure (34) ainsi que la ventouse (18) présentent un pourtour ovale, rhombique, rectangulaire ou carré.

4. Dispositif de fixation à ventouse selon l'une quelconque des revendications 1 à 3, **caractérisé en ce que** le disque en feuille (38) présente un pourtour circulaire et **en ce que** l'ouverture (44) est disposée concentriquement dans le disque en feuille (38).

5. Dispositif de fixation à ventouse selon l'une quelconque des revendications 1 à 4, **caractérisé en ce que** le disque en feuille (38) présente un pourtour ovale, rhombique, rectangulaire ou carré.

6. Dispositif de fixation à ventouse selon l'une quelconque des revendications 1 à 5, **caractérisé en ce que** la ventouse (18), dans l'état sans pression, est préformée en forme de coupe en limitant une cavité ouverte d'un côté, et **en ce que** la déformation élastique de la ventouse (18) résulte en une extraction d'air hors de l'espace (32) limité par la surface lisse (12, 42) par pression, mécanique par le biais du boulon fileté, avant que l'espace (32) enfermé soit augmenté par traction mécanique par le biais du boulon fileté (24).
